# EUROPÄISCHE PATENTSCHRIFT

(11) **EP 1 800 093 B1**
(45) Veröffentlichungstag und Bekanntmachung des Hinweises auf die Patenterteilung: **24.02.2016**
(21) Anmeldenummer: 05801440.8
(22) Anmeldetag: 05.10.2005
(51) Int. Cl.: G01F 23/296, G01N 9/00, G01F 25/00, G01N 11/16, G01N 11/00

(54) **VORRICHTUNG ZUR BESTIMMUNG UND/ODER ÜBERWACHUNG EINER PROZESSGRÖSSE EINES MEDIUMS**
DEVICE FOR DETERMINING AND/OR MONITORING A PROCESS VARIABLE OF A MEDIUM
DISPOSITIF POUR DETERMINER ET/OU CONTROLER UNE GRANDEUR DE PROCESSUS D'UN MILIEU

(30) Priorität: 15.10.2004 DE 102004050494
(43) Veröffentlichungstag der Anmeldung: 27.06.2007
(73) Patentinhaber: Endress u. Hauser GmbH u.Co. KG, 79689 Maulburg (DE)
(72) Erfinder: BRUTSCHIN, Wolfgang, 79650 Schopfheim (DE); LOPATIN, Sergej, 79540 Lörrach (DE); MÜLLER, Alexander, 79689 Maulburg (DE); FERRARO, Franco, 79739 Schwörstadt (DE)
(74) Vertreter: Andres, Angelika Maria
(86) Internationale Anmeldenummer: PCT/EP2005/054998
(87) Internationale Veröffentlichungsnummer: WO 2006/042786

(56) Entgegenhaltungen:
- DE-A1- 10 014 724
- US-A- 5 452 611

## Beschreibung

Die Erfindung bezieht sich auf eine Vorrichtung zur Bestimmung und/oder Überwachung mindestens einer Prozessgröße eines Mediums, mit mindestens einem Schwingelement in Form eines Einstabs oder einer Schwinggabel, und mit mindestens einer Regel-/Auswerteeinheit, welche das Schwingelement über mindestens eine Anrege-/Empfangseinheit zu mechanischen Schwingungen anregt, und welche anhand den von der Anrege-/Empfangseinheit empfangenen Schwingungen des Schwingelements die Prozessgröße bestimmt und/ oder überwacht. Bei der Prozessgröße handelt es sich beispielsweise um den Füllstand, die Viskosität, die Dichte oder den Durchfluss des Mediums. Bei dem Medium kann es sich beispielsweise um eine Flüssigkeit oder um ein Schüttgut handeln.

Der Druckschrift EP 0 690 976 B1 lässt sich eine Vorrichtung zur Bestimmung des Füllstandes eines Mediums entnehmen, welche ein mechanisches Schwingsystem aufweist. Anhand der Frequenz der Schwingungen des Systems wird der Füllstand festgestellt oder überwacht, wobei durch die Bedeckung des mechanischen Schwingsystems durch das Medium die Resonanzfrequenz geringer als im freien Zustand ist. Da das Schwingsystem auf einer vorbestimmten Höhe angebracht ist, kann aus der Änderung der Schwingfrequenz auf das Unter- oder Überschreiten dieses Füllstands durch das Medium geschlossen werden. Solche Änderungen der Frequenz sind jedoch z.B. auch in Folge von Alterungserscheinungen der Bauteile etc. möglich. In der genannten Druckschrift EP 0 690 976 B1 wird zur Erkennung solcher Prozesse die Anregung des Schwingsystems zu Schwingungen für eine Testphase unterbrochen und das abklingende Empfangssignal, d.h. das vom Schwingsystem empfangenen Signal, wird mit dem Anregesignal in Bezug auf die Phasen verglichen. Sind beide Phasen gleich, so ist kein Fehler in der Vorrichtung aufgetreten. Unterschiedliche Phasen sind jedoch ein Zeichen für einen Fehler.

Das Dokument DE 100 14 724 A1 befasst sich mit der Problematik des Ansatzes an der schwingfähigen Einheit. Bei Ansatz handelt es sich um das Ergebnis des Anhaftens des Mediums an der schwingfähigen Einheit. Die durch den Ansatz erhöhte Masse führt ebenfalls zu einer Änderung der Schwingfrequenz. Ein umgekehrter Effekt ergibt sich durch Korrosion der schwingfähigen Einheit, d.h. durch den Schwund durch aggressive oder abrasive Medien. In diesem Fall ist die Masse reduziert, die Schwingfrequenz jedoch auch geändert. Um Ansatz oder Korrosion zu erkennen, wird in der DE 100 14 724 A1 beschrieben, dass die schwingfähige Einheit zu zwei unterschiedlichen Schwingungsmoden angeregt wird. Eine Mode ist abhängig vom Medium, die andere nicht. Durch die Auswertung der beiden Moden lässt sich somit eine Massenänderung an der schwingfähigen Einheit feststellen.

Bei den beiden Schriften EP 0 690 976 B1 und DE 100 14 724 A1 wird zwischenzeitig die eigentliche Messung unterbrochen, um eine Testphase durchlaufen zu können.

US-A-5 452 611 offenbart ein Ultraschallfüllstandsmessgerät, wobei ein Sender in Form eines ersten piezoelektrischen Elements zu mechanischen Schwingungen mit zwei unterschiedlichen Frequenzen angeregt wird. Ein zweites piezoelektrisches Element dient als Empfänger. Während die erste höhere Frequenz durch das Medium zwischen Sender und Empfänger beeinflusst wird und der Füllstandsmessung dient, ist mittels der niedrigeren Frequenz die Intaktheit des Sensors überprüfbar.

Eine große Problematik besteht also darin, dass durch Einwirkungen des Mediums, dass durch Alterungsprozesse und viele weitere äußere Einflüsse die Zuverlässigkeit der Messvorrichtung leiden kann. Handelt es sich beispielsweise um den Anwendungsfall bei einem Schüttgut, so kann das Schwingelement (z.B. das Rohr eines Einstabs oder die Zinken einer Schwinggabel) vollständig bedeckt sein, so dass keine Schwingungen mehr möglich sind. Dieser Fall, dass keine Schwingungen auftreten, kann jedoch auch die Folge davon sein, dass eine Kabelverbindung unterbrochen ist. Zwischen diesen beiden Fällen zu differenzieren, ist offensichtlich sehr wichtig.

Somit ist es die Aufgabe der Erfindung, eine Messvorrichtung eingangs genannter Art anzugeben, die eine Fehlerüberwachung aufweist, welche simultan zur eigentlichen Messung funktioniert.

Die Erfindung löst die Aufgabe dadurch, dass die Regel-/Auswerteeinheit derartig ausgestaltet ist, dass sie die Anrege-/Empfangseinheit zu gleichzeitig mindestens einer ersten und einer zweiten Schwingungsmode anregt, wobei mindestens die erste Schwingungsmode derartig gewählt ist, dass sie unabhängig vom Medium, unterschiedlich zu den Schwingungsmoden des Schwingelements und gleich einer Schwingungsmode von mindestens einer schwingfähigen Komponente der Vorrichtung ist. Dazu gehört implizit auch, dass die Regel-/Auswerteeinheit derartig ausgestaltet ist, dass sie zumindest anhand den von der Anrege-/Empfangseinheit empfangenen Schwingungen die Funktionstüchtigkeit der Vorrichtung überwacht. Diese Auswertung kann jedoch auch in einer mit der Messvorrichtung verbundenen Leitwarte geschehen. Üblicherweise wird die Grundmode eines Schwingers als erste Mode bezeichnet. Dem folgen die höheren Moden: 1., 2., 3. usw. Mode. Die Grundmode oder erste Mode ist meist die Messmode, welcher abhängig vom Medium ist. Eine Prüfmode entsprechend der Erfindung ist somit eine höhere Mode. Die Erfindung besteht also darin auszunutzen, dass in der Messvorrichtung eine Vielzahl von Schwingungsmoden existiert. Dies sind nicht nur die Schwingungen des Schwingelements (d.h. Grundschwingung plus die höheren Resonanzen), sondern z.B. auch anderer Bestandteile der Messvorrichtung, z.B. die Schwingungen der Membran, über welche die Anrege-/Empfangseinheit und das Schwingelement oder die Schwingelemente miteinander verbunden sind, des Gehäuses, von welchem die Membran ein Teil ist und welches die Elektronik etc. beherbergt, oder z.B. Schwingungen der Anrege-/Empfangseinheit selbst. Diese Schwingungen sind nicht alle vom Medium abhängig, da sie von Komponenten/Teilen herrühren, die nicht mit dem Medium in Kontakt stehen. Es gibt also Schwingungsmoden, die unabhängig vom Medium sind und die davon herrühren, dass irgendeine Komponente oder eine Konstellation von Komponenten - z.B. im Gehäuse befindlich - schwingen kann. Diese Moden geben somit Auskunft darüber, dass diese Komponenten funktionieren und dass auch der Signalpfad zu oder von diesen Komponenten in Ordnung ist. Fehlen diese Moden, lassen sie sich nicht detektierten, so muss ein Fehler im Gerät aufgetreten sein. Beispielsweise lässt sich bei einer Verbindung zwischen Anrege-/Empfangseinheit und Membran eine Mode anregen, bei der nur die Membran schwingt, ohne - bzw. nur kaum - das Schwingelement anzuregen. Wird also diese Mode angeregt und empfangen, so ist die Verbindung in Ordnung. Fehlt diese Mode, so muss ein Fehler aufgetreten sein. Das Schöne ist, dass die Moden, die vom Medium unabhängig sind, bei einem funktionierenden Gerät ständig gegeben sein müssen - es gibt keine zulässige Einwirkung auf sie, wie sie z.B. das Medium auf das Schwingelement ausübt. Die Erfindung ist also, dass ein Spektrum von Schwingungsmoden, die ggf. eine Vielzahl von Moden - mindestens jedoch eine Mode - des gesamten Systems des Messgerätes beinhaltet, angeregt und empfangen wird. Ändert sich das Spektrum in den Bereichen, in denen die mediumsunabhängigen Moden zu finden sind, so ist im Gerät ein Fehler aufgetreten. Im normalen Betrieb wird das Schwingelement durch die Anrege-/Empfangseinheit zu einer Schwingung angeregt, in der Erfindung wird die Anrege-/Empfangseinheit selbst und auch andere Bestandteile des Messgerätes zu mehreren Schwingungsmoden angeregt, so dass sich auch unterschiedliche Schwingungen des gesamten Systems einstellen können.

Die Erfindung beinhaltet, dass die erste Schwingungsmode unterschiedlich zu den Schwingungsmoden des Schwingelements ist. Es handelt sich also um eine Schwingungsmode, die nicht von dem Schwingelement ausgeführt wird, bzw. bei dem das Schwingelement nicht schwingt oder frei von Schwingungen ist. Die erste Schwingungsmode im Verständnis der Erfindung ist also verschieden zu den Schwingungsmoden des Schwingelements. Zumindest ist die erste Schwingungsmode, also die Prüfmode, verschieden zur Grundmode des Schwingelements, d.h. des Schwingers an sich. Somit wird also mit dieser ersten Mode oder mit weiteren Moden, die ebenfalls dieses Kriterium erfüllen, die Funktionsfähigkeit der Bestandteile der Vorrichtung mit Ausnahme des Schwingelements überprüft. Daher bleibt also durch die erste Schwingungsmode das Schwingelement in Ruhe und kann sich beispielsweise nicht freischaufeln.

Eine Ausgestaltung sieht vor, dass die zweite Schwingungsmode abhängig vom Medium ist. Die zweite Schwingungsmode kann also eine Schwingungsmode des Schwingelements sein, resp. des Systems, welches sich aus dem Schwingungselement und der Membran ergibt. Es wird also mindestens eine erste Mode angeregt, die unabhängig oder im Wesentlichen unabhängig vom Medium ist. Die zweite Mode ist in dieser Ausgestaltung vom Medium abhängig. Es handelt sich beispielsweise um die Grundmode des Schwingelements. Damit ist der Vorteil verbunden, dass gleichzeitig mindestens eine "Überwachungsmode" und eine "Messmode" angeregt werden. Elektrisch lassen sich beide Moden getrennt mit mindestens zwei Bandpass-Filtern auswerten und mit einer einfachen Logik beobachten: ein Signal dient als Messsignal und ein anderes dient als Prüfsignal. Damit wird also simultan die Sicherheit überwacht und die Messaufgabe wird erfüllt. Durch das Überwachen der Funktionalität des Messgerätes kommt es also nicht zu einer Unterbrechung der Messung. Bei der ersten und der zweiten Moden kann es sich jedoch auch nur um "Überwachungsmoden" / Prüfmoden für die Funktionsfähigkeit handeln.

Eine Ausgestaltung beinhaltet, dass die Regel-/Auswerteeinheit derartig ausgestaltet ist, dass sie die Anrege-/Empfangseinheit gleichzeitig zu mehr als zwei Schwingungsmoden anregt. Es sind also nicht nur eine erste und eine zweite Mode, sondern auch eine dritte, vierte oder allgemeine n-te Mode (n>2) vorgesehen. Diese beliebige Mehrheit von Moden kann sich z.B. dadurch ergeben, dass die Anrege-/Empfangseinheit mit einem ganzen Frequenzband zu Schwingungen angeregt wird, wodurch sich die möglichen Resonanzen des Messgerätes einstellen und im empfangenen Spektrum sichtbar sind.

Eine Ausgestaltung sieht vor, dass die Regel-/Auswerteeinheit derartig ausgestaltet ist, dass sie die Anrege-/Empfangseinheit mit einem Rechteckpuls zu Schwingungen anregt. Ein Rechteckpuls (mit einer einstellbaren Trägerfrequenz und einer einstellbaren Dauer bzw. einer einstellbaren Frequenzbreite) bringt immer eine Vielzahl von Anregefrequenzen mit sich, so dass sich also auch viele Schwingungsmoden einstellen können. Es sind jedoch auch andere Signalprofile möglich, z.B. dreieckige oder trapezförmige Signale. Eine alternative Ausgestaltung sieht vor, dass die Anrege-/Empfangseinheit mit einer Überlagerung von unterschiedlichen Schwingungsmoden zu Schwingungen angeregt wird. Dies bedeutet eine Fokussierung auf ausgesuchte Schwingungsmoden. Damit lässt sich die Auswertung vereinfachen und es lassen sich auch gezielt Moden auswählen, die charakteristisch für besondere Komponenten, Verbindungen, Konstellationen etc. sind.

Eine Ausgestaltung beinhaltet, dass es sich bei der Prozessgröße um den Füllstand, die Dichte oder die Viskosität des Mediums handelt. Dies sind die meist üblichen Prozessgrößen eines Mediums, die mit einem beschriebenen Messgerät bestimmt und/oder überwacht werden. Diese Auswahl stellt jedoch keine Beschränkung da, sondern es sind nur die wesentlichen und bekannten Prozessgrößen. Bei dem Messgerät kann es sich auch um ein Durchflussmessgerät handeln. Der Aufbau und die Ausgestaltung sind dann entsprechend.

Eine Ausgestaltung sieht vor, dass die Regel-/Auswerteeinheit anhand der Amplitude der mechanischen Schwingung des Schwingelements die Prozessgröße des Mediums bestimmt und/oder überwacht. Durch den Kontakt des Schwingelements mit dem Medium können die Frequenz, die Amplitude und auch die Phase zwischen Anrege- und Empfangssignal beeinflusst werden. Bei Flüssigkeiten ist die Ankopplung zwischen dem Medium und dem Schwingelement sehr stark gegeben, so dass eine Frequenzänderung auftritt. Bei Schüttgütern, also bei Feststoffen, ist die Kopplung geringer, aber die mechanischen Verluste sind deutlich größer, und es wird eher die Amplitude beeinflusst.

Eine Ausgestaltung beinhaltet, dass es sich bei dem Medium um ein Schüttgut handelt. Bei einem solchen Schüttgut ist es im Bedecktfall, d.h. das Medium bedeckt die schwingfähige Einheit und lässt keine Schwingungen mehr zu, sehr wichtig, die Funktionstüchtigkeit zu überprüfen. Das Schwingelement wird zwar zu Schwingungen angeregt, aber durch die Bedeckung werden keine Schwingungen empfangen. Dies ist auch deshalb sinnvoll, damit sich das Schwingelement durch ihre Schwingungen nicht "freischaufeln" kann und somit fälschlich ein Frei-Signal erzeugt. In dem Fall, dass kein Signal detektiert wird, kann jedoch nicht sicher angegeben werden, ob das Messgerät funktioniert, denn ein Kabelbruch, ein Abriss des Schwingelements liefert ebenfalls kein Signal. Daher ist hier besonders die Erfindung wichtig und mit dem großen Vorteil der Sicherheit verbunden.

Eine Ausgestaltung sieht vor, dass es sich bei dem Schwingelement um eine Schwinggabel handelt. Eine Schwinggabel besteht üblicherweise aus mindestens zwei Gabelzinken.

Eine Ausgestaltung beinhaltet, dass es sich bei der Anrege-/Empfangseinheit um mindestens eine piezo-elektrische Einheit handelt. Ein solcher Piezowandler wandelt eine elektrische Wechselspannung in eine mechanische Spannung und umgekehrt um. Somit ist er ideal für die Anwendung in der Anrege-/Empfangseinheit. Dabei ist es möglich, dass ein Piezowandler als Sender und Empfänger dient, oder dass ein Piezowandler als Sender und ein zweiter Wandler als Empfänger dient.

Die Erfindung wird anhand der nachfolgenden Zeichnung näher erläutert. Es zeigt:

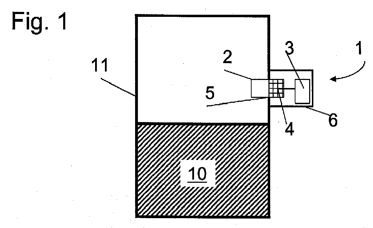

Fig. 1: eine schematische Darstellung der in einem Tank eingebauten erfindungsgemäßen Messvorrichtung.

In der Fig. 1 befindet sich die Vorrichtung 1 an der Wandung eines Behälters 11, in welchem sich das Medium 10 befindet. Die Vorrichtung oder der Sensor 1 ist an einer vorbestimmten Füllhöhe angebracht, so dass aus dem Sensorsignal geschlossen werden kann, dass dieser Füllstand durch das Medium 10 erreicht oder unterschritten worden ist. Die Vorrichtung 1 weist ein Schwingelement 2, das durch die Anrege-/Empfangseinheit 4 zu mechanischen Schwingungen angeregt wird. Ein Schwingelement 2 ist bei einem sog. Einstab vorhanden; zwei Schwingelemente 2 sind als Gabelzinken bei einer Schwinggabel notwendig. Steigt der Füllstand des Mediums 10 an, so erreicht es das Schwingelement 2 und beeinflusst dessen Schwingungen. So können sich die Frequenz, die Amplitude und auch die Phase relativ zum Anregesignal ändern. Handelt es sich bei dem Medium 10 um eine Flüssigkeit, so wird üblicherweise die Frequenzänderung ausgewertet. Ist das Medium 10 ein Schüttgut, so wird meist die Änderung der Amplitude zur Feststellung des Füllstandes herangezogen. Bei Bedeckung durch das Schüttgut 10 wird die Amplitude kleiner und bricht völlig ab. Dass die Amplitude gegen Null geht, dient dem Aspekt, dass sich das Schwingelement 2 nicht "freischaufeln" kann und somit das Unterschreiten des Füllstands anzeigt. Das Signal: "keine Schwingung" kann jedoch auch mit dem Fall verwechselt werden, dass ein Teil der Vorrichtung 1 nicht mehr funktioniert, dass z.B. ein Steckkontakt nicht mehr steckt, oder dass das Schwingelement 2 nicht mehr mit der Membran verbunden ist usw. Daher ist es wichtig, dass die Funktionsfähigkeit der Vorrichtung 1 als Ganzes überwacht wird. Dieser Aufgabe dient die Erfindung.

Das Schwingelement 2 wird durch die Anrege-/Empfangseinheit 4 über die Membran 5 - Schwingelement 2 und Membran 5 werden meist auch als mechanisch schwingfähige Einheit zusammengefasst - zu mechanischen Schwingungen angeregt. Bei der Anrege-/Empfangseinheit 4 handelt es sich beispielsweise um ein piezoelektrisches Element, das als Sender und Empfänger fungiert, oder um mindestens zwei Piezowandler, die getrennt als Sender und Empfänger arbeiten. Ein solcher Piezowandler wird durch eine elektrische Wechselspannung zu mechanischen Schwingungen angeregt, bzw. er überträgt eine mechanische Schwingung in eine elektrische Wechselspannung. Die Anregung bzw. die Auswertung erfolgt durch die Regel-/Auswerteeinheit 3. Diese Einheit 3 weist üblicherweise eine Rückkoppelelektronik auf, die das von der Anrege-/Empfangseinheit 4 empfangene Signal verstärkt und wieder der Anrege-/Empfangseinheit 4 bzw. dadurch dem Schwingelement 2 zuführt. Durch diese Rückkopplung sind also kontinuierliche Schwingungen möglich. Weiterhin werden aus dem empfangenen Signal, also aus dem Antwortsignal des Schwingelements 2 Aussage über den Füllstand, aber auch über Dichte oder Viskosität des Mediums 10 gewonnen. Die Regel-/Auswerteeinheit 3 befindet sich in dem Gehäuse 6, welches die Vorrichtung 1 abschließt. Ggf. ist auch eine Busverbindung - hier nicht dargestellt - zu einer Steuerwarte vorgesehen, welche beispielsweise aufgrund des Signals "Füllstand erreicht" oder "Füllstand unterschritten" Aktionen auslöst.

Die Erfindung ist nun, dass die Anrege-/Empfangseinheit 4 durch die Regel-/Auswerteeinheit 3 nicht die üblichen Grundschwingung des Schwingelements 2 erzeugt, sondern dass mindestens zwei Moden gleichzeitig angeregt werden. Eine erste Mode ist dabei unabhängig vom Medium. Es handelt sich also um eine Schwingungsmode, die beispielsweise irgendwo in der Vorrichtung 1 von irgendwelchen Bauteilen auftritt. Es kann beispielsweise eine reine Mode der Membran 5 sein, die schwingt, ohne - oder zumindest vernachlässigbar - das Schwingelement 2 zu Schwingungen anzuregen. Es kann sich beispielsweise auch um eine Schwingung der Schweißstellen zwischen Schwingelement 2 - beispielsweise die Gabelzinken - und Membran handeln. Vorzugsweise handelt es sich um Schwingungsmoden, deren Frequenzen weit jenseits der Schwingungen des Schwingelements 2 liegen. Ist eine zweite Mode abhängig vom Medium 10, handelt es sich vorzugsweise sogar um die Grundmode des Schwingelements 2, so können gleichzeitig der Füllstand oder die Dichte oder die Viskosität oder welche Prozessgröße auch immer gemessen und die Funktionalität der Vorrichtung 1 überwacht werden. Die Anregung der Anrege-/Empfangseinheit 4 erfolgt dabei entweder mit einer Überlagerung ausgesuchter Frequenzen, die zu den entsprechenden Moden gehören, oder es wird ein Rechteckpuls verwendet, der automatisch eine Anregung innerhalb eines Frequenzbandes mit sich bringt. Durch den Rechteckpuls werden alle Moden innerhalb eines solchen Frequenzbandes angeregt und die Frequenzen müssen nicht wie bei der gezielten Anregung genau bekannt sein.

In Bezug auf die Schwingungsmoden lassen sich zwei Gesichtspunkte unterscheiden: Werden generell möglichst viele Moden angeregt, ohne zwischen ihnen zu differenzieren, so lässt sich die grundlegende Aussage treffen, ob der Sensor 1 funktioniert oder nicht. Es ließe sich auch aus einer Verminderung der Signale eine Art "predictive maintenance", also eine Vorhersage der Aufrechterhaltung der Funktionalität realisieren.

Werden jedoch gezielt spezielle Funktionsüberwachungsmoden angeregt, so muss zunächst bekannt sein, um welche Moden es sich handelt, welche Teile also schwingen. Aus dem Wegfall einer Mode kann jedoch geschlussfolgert werden, an welcher Stelle der Fehler aufgetreten ist.

Durch eine erfindungsgemäße Mehr-Moden-Anregung ergibt sich also ein ganzes Spektrum von Schwingungen. Das zu erwartete Spektrum kann dabei schon bei der Fertigung in der Vorrichtung 1 hinterlegt werden, wenn es sich um Moden handelt, die nicht vom Einbau der Vorrichtung abhängig sind. Das Spektrum im Bereich der Schwingungen des Schwingelements 2 ändert sich in Abhängigkeit vom Medium 10, wenn es sich um eine Flüssigkeit handelt. Bei einem Schüttgut ändert es sich nicht oder nur kaum. Der Bereich des Spektrum, in dem sich die Funktionalitätsüberwachungsmoden befinden, sollte sich vorzugsweise auch nicht ändern, da die Vorrichtung 1 selbst möglichst immer intakt bleiben sollten. Tritt jedoch ein Fehler auf, so ändert sich dieser Spektrumsteil, indem beispielsweise Resonanzen verschwinden. Somit ist eine Änderung des Spektrum ein Zeichen dafür, dass ein Fehler aufgetreten ist.

## Patentansprüche

1. Vorrichtung (1) zur Bestimmung und/oder Überwachung mindestens einer Prozessgröße eines Mediums (10),
mit mindestens einem Schwingelement (2) in Form eines Einstabs oder einer Schwinggabel,
und
mit mindestens einer Regel-/Auswerteeinheit (3), welche das Schwingelement (2) über mindestens eine Anrege-/Empfangseinheit (4) zu mechanischen Schwingungen anregt, und welche anhand den von der Anrege-/Empfangseinheit (4) empfangenen Schwingungen des Schwingelements (2) die Prozessgröße bestimmt und/oder überwacht,
**dadurch gekennzeichnet,**
**dass** die Regel-/Auswerteeinheit (3) derartig ausgestaltet ist, dass sie die Anrege-/Empfangseinheit (4) zu gleichzeitig mindestens einer ersten und einer zweiten Schwingungsmode anregt,
wobei mindestens die erste Schwingungsmode derartig gewählt ist, dass sie unabhängig vom Medium (10), unterschiedlich zu den Schwingungsmoden des Schwingelements (2) und gleich einer Schwingungsmode von mindestens einer schwingfähigen, nicht mit dem Medium in Kontakt stehenden, Komponente der Vorrichtung (1) ist.

2. Vorrichtung (1) nach Anspruch 1,
**dadurch gekennzeichnet,**
**dass** die zweite Schwingungsmode abhängig vom Medium (10) ist.

3. Vorrichtung (1) nach Anspruch 1,
**dadurch gekennzeichnet,**
**dass** die Regel-/Auswerteeinheit (3) derartig ausgestaltet ist, dass sie die Anrege-/Empfangseinheit (4) gleichzeitig zu mehr als zwei Schwingungsmoden anregt.

4. Vorrichtung (1) nach Anspruch 3,
**dadurch gekennzeichnet,**
**dass** die Regel-/Auswerteeinheit (3) derartig ausgestaltet ist, dass sie die Anrege-/Empfangseinheit (4) mit einem Rechteckpuls zu Schwingungen anregt.

5. Vorrichtung (1) nach Anspruch 1,
**dadurch gekennzeichnet,**
**dass** es sich bei der Prozessgröße um den Füllstand, die Dichte oder die Viskosität des Mediums (10) handelt.

6. Vorrichtung (1) nach Anspruch 1,
**dadurch gekennzeichnet,**
**dass** die Regel-/Auswerteeinheit (3) anhand der Amplitude der mechanischen Schwingung des Schwingelements (2) die Prozessgröße des Mediums (10) bestimmt und/oder überwacht.

7. Vorrichtung (1) nach Anspruch 6,
**dadurch gekennzeichnet,**
**dass** es sich bei dem Medium (10) um ein Schüttgut handelt.

8. Vorrichtung (1) nach Anspruch 1,
**dadurch gekennzeichnet,**
**dass** es sich bei der Anrege-/Empfangseinheit (4) um mindestens eine piezo-elektrische Einheit handelt.

## Claims

1. Apparatus (1) for determining and/or monitoring at least one process variable of a medium (10),
with at least one vibrating element (2) in the form of a single rod or a tuning fork, and
with at least one control/evaluation unit (3), which causes the vibrating element (2) to perform mechanical vibrations via at least one exciter/receiver unit (4), and which uses the vibrations of the vibrating element (2) received by the exciter/receiver unit (4) to determine and/or monitor the process variable,
**characterized in that**
the control/evaluation unit (3) is designed in such a way that it excites the exciter/receiver unit (4) to at least a first mode of vibration and a second mode of vibration simultaneously,
wherein at least the first mode of vibration is selected in such a way that, irrespective of the medium (10), it is different to the modes of vibration of the vibrating element (2) and equal to a mode of vibration of at least one component of the apparatus (1) which is capable of vibration and is not in contact with the medium.

2. Apparatus (1) as claimed in Claim 1,
**characterized in that**
the second mode of vibration depends on the medium (10).

3. Apparatus (1) as claimed in Claim 1,
**characterized in that**
the control/evaluation unit (3) is designed in such a way that it excites the exciter/receiver unit (4) to more than two modes of vibration simultaneously.

4. Apparatus (1) as claimed in Claim 3,
**characterized in that**
the control/evaluation unit (3) is designed in such a way that it causes the exciter/receiver unit (4) to perform vibrations with a rectangular pulse.

5. Apparatus (1) as claimed in Claim 1,
**characterized in that**
the process variable is the level, density or viscosity of the medium (10).

6. Apparatus (1) as claimed in Claim 1,
**characterized in that**
the control/evaluation unit (3) determines and/or monitors the process variable of the medium (10) on the basis of the amplitude of the mechanical vibration of the vibrating element (2).

7. Apparatus (1) as claimed in Claim 6,
**characterized in that**
the medium (10) is a bulk solid.

8. Apparatus (1) as claimed in Claim 1,
**characterized in that**
the exciter/receiver unit (4) is at least a piezoelectric unit.

## Revendications

1. Dispositif (1) destiné à la détermination et/ou la surveillance d'au moins une grandeur process d'un produit (10),
avec au moins un élément vibrant (2) sous la forme d'une tige unique ou de lames vibrantes,
et
avec au moins une unité de régulation / d'exploitation (3), qui excite en vibrations mécaniques l'élément vibrant (2) par l'intermédiaire d'au moins une unité d'excitation / de réception (4), et qui détermine et/ou surveille la grandeur process sur la base des vibrations de l'élément vibrant (2) reçues par l'unité d'excitation / de réception (4),
**caractérisé**
**en ce que** l'unité de régulation / d'exploitation (3) est conçue de telle sorte à ce qu'elle excite simultanément l'unité d'excitation / de réception (4) au moins en un premier et en un deuxième mode de vibration,
dispositif pour lequel au moins le premier mode de vibration est sélectionné de telle sorte qu'il soit indépendant du produit (10), différent des modes de vibration de l'élément vibrant (2) et égal à un mode de vibration d'au moins un composant du dispositif (1) apte à vibrer, qui n'est pas en contact avec le produit.

2. Dispositif (1) selon la revendication 1,
**caractérisé**
**en ce que** le deuxième mode de vibration est dépendant du produit (10).

3. Dispositif (1) selon la revendication 1,
**caractérisé**
**en ce que** l'unité de régulation / d'exploitation (3) est conçue de telle sorte à ce qu'elle excite simultanément l'unité d'excitation / de réception (4) en plus de deux modes de vibration.

4. Dispositif (1) selon la revendication 3,
**caractérisé**
**en ce que** l'unité de régulation / d'exploitation (3) est conçue de telle sorte à ce qu'elle excite en vibrations l'unité d'excitation / de réception (4) avec une impulsion rectangulaire.

5. Dispositif (1) selon la revendication 1,
**caractérisé**
**en ce qu'**il s'agit, concernant la grandeur process, de la densité ou de la viscosité du produit (10).

6. Dispositif (1) selon la revendication 1,
**caractérisé**
**en ce que** l'unité de régulation / d'exploitation (3) détermine et/ou surveille la grandeur process du produit (10) sur la base de l'amplitude des vibrations mécaniques de l'élément vibrant (2).

7. Dispositif (1) selon la revendication 6,
**caractérisé**
**en ce qu'**il s'agit, concernant le produit (10), d'une matière en vrac.

8. Dispositif (1) selon la revendication 1,
**caractérisé**
**en ce qu'**il s'agit, concernant l'unité d'excitation / de réception (4), d'au moins une unité piézoélectrique.
